# EUROPEAN PATENT SPECIFICATION

(11) **EP 1 655 689 B1**
(45) Date of publication and mention of the grant of the patent: **23.05.2012**
(21) Application number: 04771703.8
(22) Date of filing: 10.08.2004
(51) Int. Cl.: G06K 13/067, G06K 13/08

(54) **CARD INFORMATION READING DEVICE**
KARTENINFORMATIONSLESEEINRICHTUNG
DISPOSITIF DE LECTURE D'INFORMATIONS DE CARTE

(30) Priority: 11.08.2003 JP 2003207227
(43) Date of publication of application: 10.05.2006
(73) Proprietor: OMRON CORPORATION, Kyoto-shi, Kyoto 600-8530 (JP)
(72) Inventor: TADAMASA, Akihiro, c/o Omron Corporation, Shimogyo-ku, Kyoto-shi, Kyoto 600-8530 (JP)
(74) Representative: Strehl Schübel-Hopf & Partner
(86) International application number: PCT/JP2004/011742
(87) International publication number: WO 2005/015484

(56) References cited:
- EP-A- 0 215 712
- EP-A- 0 311 119
- JP-A- 1 097 488
- JP-A- 63 015 384
- JP-U- 59 038 881

## Description

### TECHNICAL FIELD

The present invention relates to a card information reading device for reading information recorded on a card and more particularly, to a technology for deciding whether an object inserted in an insertion port is a card or a foreign matter.

### BACKGROUND ART

Available as a card information reading device for reading information recorded on a card is a card reader. In the card reader, when a card such as contact type IC card, non-contact type IC card or magnetic card is inserted from an insertion port and infiltrated into the interior of main frame, information reading is applied to the card by a reading means such as IC contact, antenna or magnetic head.

If, in this type of card reader, a foreign matter other than a card is inserted in the insertion port and treated as a card, the foreign matter causes such abnormality as clogging of a card passage or damage of parts inside the main frame and therefore, countermeasures for preventing the foreign matter from being handled as a card has hitherto been needed.

In a card reader of, for example, JP-A-8-55258 (hereinafter, referred to as "prior art 1"), the aforementioned countermeasures are materialized by providing a shutter for opening/closing a card passage and two photo-interrupters arranged at a pitch less than a width of the card in the card passage more closely to an insertion port than to the shutter. Then, only when both of the two photo-interrupters detect an object inserted in the insertion port, the shutter is allowed to open, thereby ensuring that in the event of insertion of a foreign matter having a narrower width than the card, the shutter will not open.

Further, in a card reader of JP-A-8-55259 (hereinafter, referred to as "prior art 2") or JP-A-11-85916 (hereinafter, referred to as "prior art 3"), any photo-interrupters as in the prior art 1 are not disposed but a pair of card detection segments movable in the direction of card width when pushed by a card are provided at intervals of a less than card width. Then, only when both of the paired card detection segments are moved by an object inserted from an insertion port, a shutter is allowed to open in order that the shutter will not open in the event of insertion of a foreign matter narrower than the card width.

On the other hand, in a card reader for use with a magnetic card, a sensor for detecting whether an object inserted in an insertion port has a predetermined width and a magnetic head for detecting whether the inserted object has magnetic stripes are provided near the insertion port. In this type of card reader, only when the sensor detects the predetermined width and the magnetic head detects the magnetic stripes, the inserted object is determined as a magnetic card and an information reading process and the like are carried out. Card readers of this type are known from EP 0 215 712 A1, EP 0 311 119 A1 and JP 63-015384 A, each of which discloses the features included in the first part of claim 1.

In the card readers of the aforementioned prior arts 1 to 3, an object inserted into the insertion port is decided as to whether to be a card or a foreign matter depending on whether the object has the predetermined width. But, for example, in the event that the third person intending to commit an illegal act inserts a foreign matter having substantially the same width as the card, this type of card reader mistakes the foreign matter for the card. Consequently, in the card reader with the shutter as in the prior arts 1 to 3, the shutter is allowed to open, so that there occur clogging of the card passage with the foreign matter and damage of internal parts by the foreign matter infiltrating into the interior of main frame. If an information reading process is urged to be applied to the entering foreign matter with a reading means, the reading means will be damaged.

On the other hand, in the aforementioned card reader for use with a magnetic card, an inserted object is decided as to whether to be a magnetic card or a foreign matter on the basis of a result of detection of the object width and a result of detection of the presence or absence of the magnetic stripes but this method cannot be applied to a card reader treating a contact type or non-contact type IC card.

### DISCLOSURE OF INVENTION

An object of the present invention is to provide a card information reading device which does not handle an inserted foreign object as a card.

This object is met by the card information reading device defined in claim 1.

### BRIEF DESCRIPTION OF THE DRAWINGS

Fig. 1 is diagram schematically showing the construction of an IC card reader.
Fig. 2 is a diagram schematically showing the construction of the IC card reader of Fig. 1.
Fig. 3 is a diagram schematically showing the construction of the IC card reader of Fig. 1.
Fig. 4 is a block diagram of card reader of Fig. 1.
Fig. 5 is a diagram showing an IC card insertion state in Fig. 1.
Fig. 6 is a diagram showing a foreign object insertion state in the first embodiment.
Fig. 7 is a diagram showing a foreign object insertion state in Fig. 1.
Fig. 8 is a flowchart for the card reader of Fig. 1.
Fig. 9 is a diagram schematically showing the construction of an IC card reader according to an embodiment of the invention.
Fig. 10 is a diagram schematically showing the construction of the IC card reader of Fig. 9.
Fig. 11 is a block diagram of Fig. 9.
Fig. 12 is a diagram showing an IC card insertion state in Fig. 9.
Fig. 13 is a diagram showing a foreign object insertion state in Fig. 9.
Fig. 14 is a flowchart for the card reader of Fig. 9.
Fig. 15 is a diagram showing an IC card insertion state in a second embodiment.
Fig. 16 is a diagram showing a foreign object insertion state in the second embodiment.
Fig. 17 is a flowchart in the second embodiment.

### BEST MODE FOR CARRYING OUT THE INVENTION

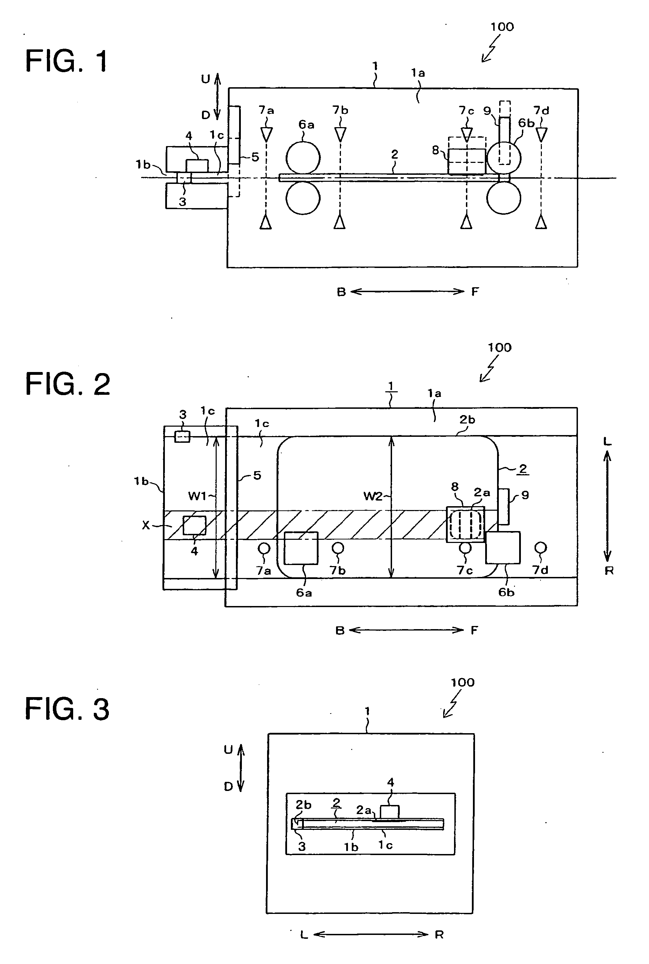

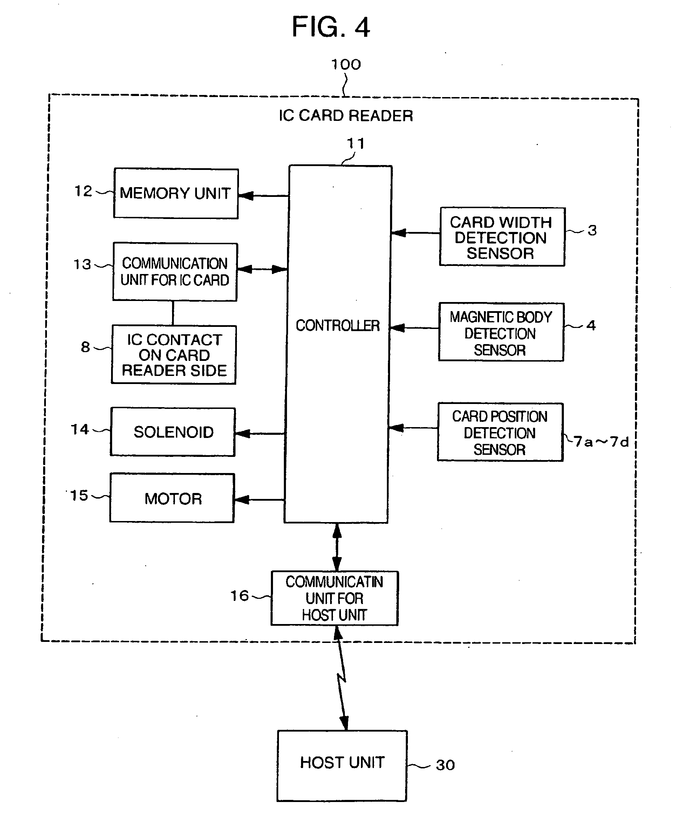

Figs. 1 to 8 are diagrams showing a card reader which is not an embodiment of the present invention. Firstly, by making reference to Figs. 1 to 3, the schematic construction of an IC card reader. Fig. 1 shows a sectional view of the IC card reader, Fig. 2 shows a top view of the same and Fig. 3 shows a front view of the same. In Fig. 1, reference numeral 100 designates the IC card reader which is mounted in a host unit 30 (shown in Fig. 4), for example, an automatic teller machine and connected thereto. Denoted by 1 is a main frame of IC card reader 100 and by 1a is an internal space of main frame 1 (hereinafter, described as main frame interior). Denoted by 2 is an IC card having its interior embedded with an IC for recording information (not shown). Reading of information from the internal IC is carried out through an IC contact 2a (Fig. 2) provided at a predetermined position on the surface of the IC card 2. The IC contact 2a is formed with a cupper pattern on which nickel or gold plating is applied. The position of the IC contact 2a on the card 2 and the size of card 2 are prescribed by standards, for example. Denoted by 1b is an insertion port into which the card 2 is inserted in F direction and by 1c is a card passage leading from the insertion port 1b to the main frame interior 1a. It will be appreciated that as shown in Fig. 2, a width W1 of card passage 1c is made to be slightly larger than a width W2 of card 2 so that the card 2 may be movable in F and B directions without being inclined.

Reference numeral 5 designates a shutter which is provided for the card passage 1c and is opened/closed in up and down directions U and D (Fig. 1). The shutter 5 regulates the infiltration of card 2 from insertion port 1b to main frame interior 1a or the discharge of card 2 from main frame interior 1a to insertion port 1b. In Fig. 1, the opened state of shutter 5 is depicted at solid line and the closed state of shutter 5 is depicted at dashed line. Denoted by 3 is a card width detection sensor comprised of a photo-interrupter. As shown in Figs. 2 and 3, the card width detection sensor 3 is disposed near the insertion port 1b on L-direction side of the passage 1c. The sensor 3 detects, at a position closer to insertion port 1b than to shutter 5, whether an object having substantially the same width as card width W 2 is inserted. For example, when a card 2 is inserted from the insertion port 1b, the sensor 3 detects an L-direction side end 2b of the card 2 entering in F direction along the passage 1c, thus switching from OFF state to ON state so as to deliver a switching signal to a controller 11 (shown in Fig. 4). In case an object having a width smaller than the card width W2 is inserted from the insertion port 1b, the sensor 3 fails to detect the object, keeping the OFF state.

Reference numeral 4 designates a magnetic body detection sensor comprised of a Hall element and a magnet. As shown in Fig. 3, the magnetic body detection sensor 4 is disposed near the insertion port 1b on the U-direction side of channel 1c so as to be in a position or location X (shown in Fig. 2) along which the IC contact 2a of card 2 passes. On the basis of a change in a magnetic field generated by the magnet in the more proximity to the insertion port 1b than to the shutter 5, the sensor 4 detects whether a magnetic substance such as metal is inserted in the insertion port 1b. For example, as the card 2 enters the insertion port 1b, the magnetic field by the magnet changes on account of the fact that the IC contact 2a representing the magnetic substance approaches and therefore, the Hall element detects the change to output a voltage of a predetermined value to the controller 11. Contrarily, in the event that an object not having a magnetic substance at substantially the same position as that for the card 2 is inserted from the insertion port 1b, the magnetic field by the magnet hardly changes and as a result, the Hall element delivers to the controller 11 a voltage of a predetermined value which is different from that during approaching of the IC contact 2a.

Paired upper and lower rollers 6a and paired upper and lower rollers 6b shown in Fig. 1 are rotated by a motor 15 (shown in Fig. 4) and they convey the card 2 in the F direction when the motor 15 is driven for forward rotation and convey the card 2 in B direction when the motor is driven for backward rotation. The rollers 6b on the F-direction side are adapted either to collect the card 2 into a collection box (illustration omitted) of host unit 30 arranged on the F-direction side of IC card reader 100 or to convey an unstandardized card which is elongated in the F and B directions. Denoted by 7a to 7d are card position detection sensors comprised of photo micro-sensors. These sensors 7a to 7d detect that the card 2 is conveyed to a predetermined position in the main frame interior 1a. The sensors 7a to 7d are in OFF condition when not detecting the card 2 but are brought into ON condition when detecting the card 2.

Reference numeral 8 designates an IC contact on the side of card reader 100 which can be moved in the up and down directions U and D by means of a solenoid. When the card 2 is conveyed to the main frame interior 1a by means of the rollers 6a and then stopped as shown in Fig. 1, the IC contact 8 moves from a position indicated at dotted line to a position indicated at solid line in order to read information from the IC inside the card 2 and comes into contact with the IC contact 2a on the side of card 2. Alternatively, the IC contact 8 may not be moved by the solenoid but may be fixed at the position indicated at solid line. Denoted by 9 is a stopper which can be moved in the up and down directions U and D by means of a solenoid. Normally, the stopper 9 is held in place indicated at solid line to stop the card 2 conveyed by the rollers 6a at a position where the IC contact 8 and IC contact 2a can make contact with each other. When collecting a card 2 into the collection box of host unit 30 as described previously, the stopper 9 is moved to the position indicated at dotted line so as to enable the card 2 conveyed by the rollers 6a and rollers 6b to pass by.

Fig. 4 is a block diagram showing the electrical construction of the IC card reader 100. In Fig. 4, reference numeral 11 designates the controller for controlling individual components of the IC card reader 100, which controller includes a CPU, a ROM, a RAM and control circuits to be described later. It will be appreciated that the ROM is stored with a program for operating the CPU and the like and the RAM is readably/rewritably stored with control data necessary for the CPU to control the individual components. Reference numeral 12 designates a memory unit constructed of a RAM, nonvolatile memory or the like. Reference numeral 13 designates a communication unit for IC card including a communication circuit adapted to communicate with the IC of IC card 2 through the aforementioned IC contact 8. The controller 11 causes the communication unit 13 to apply an electric current from the IC contact 8 to the IC contact 2a of IC card 2, thus reading information from the IC of IC card 2. Reference numeral 14 designates a plurality of solenoids for moving the aforementioned shutter 5, IC contact 8 and stopper 9, respectively. The controller 11 has control circuits for controlling drive of the individual solenoids 14 and the individual circuits drive the individual solenoids 14 to open/close the shutter 5 or move the IC contact 8 and stopper 9. Reference numeral 15 designates the aforementioned motor for rotating the rollers 6a and rollers 6b. The controller 11 has the control circuit for controlling drive of the motor 15 and the circuit drives the motor 15 for forward rotation or backward rotation to rotate the rollers 6a and rollers 6b so that the card 2 may be conveyed at a predetermined speed to the predetermined position in the main frame interior 1a.

Reference numeral 3 designates the aforementioned card width detection sensor, 4 the aforementioned magnetic body detection sensor and 7a to 7d the aforementioned card position detection sensors. On the basis of a signal the aforementioned card width detection sensor 3 outputs and a voltage value the magnetic body detection sensor 4 outputs, the controller 11 decides, in a manner to be described later, whether an IC card 2 or a foreign object is inserted in the insertion port 1b. Denoted by 16 is a communication unit for host unit including a communication circuit for mutual communication with the host unit 30. The controller 11 causes the communication unit 16 to transmit information read out of the card 2 to the host unit 30. In the above construction, the controller 11 constitutes a decision means and open/close control means. The IC contact 8 and IC card communication unit 13 constitute a reading means.

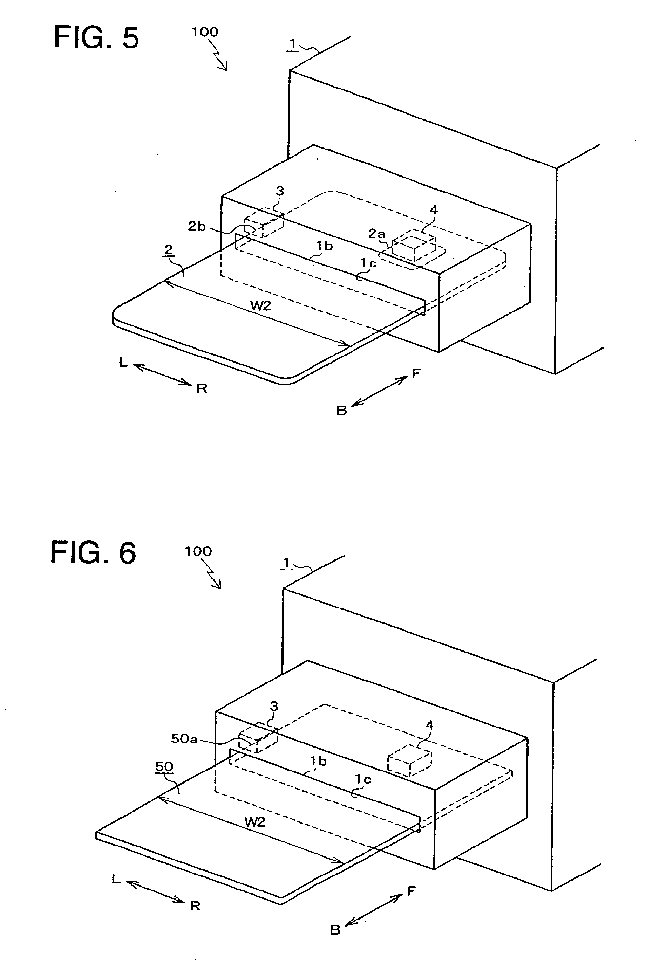

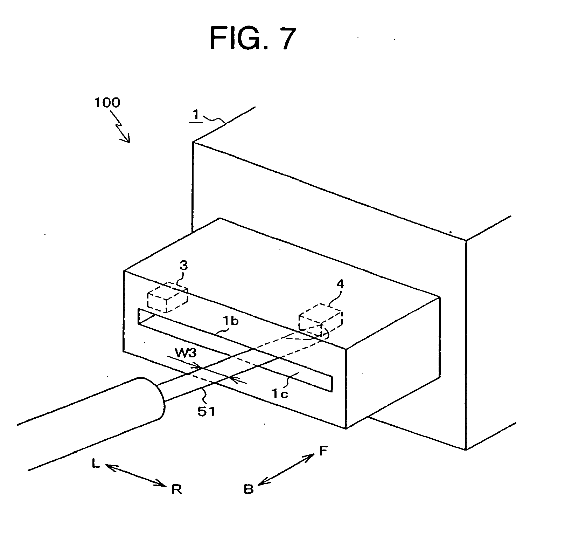

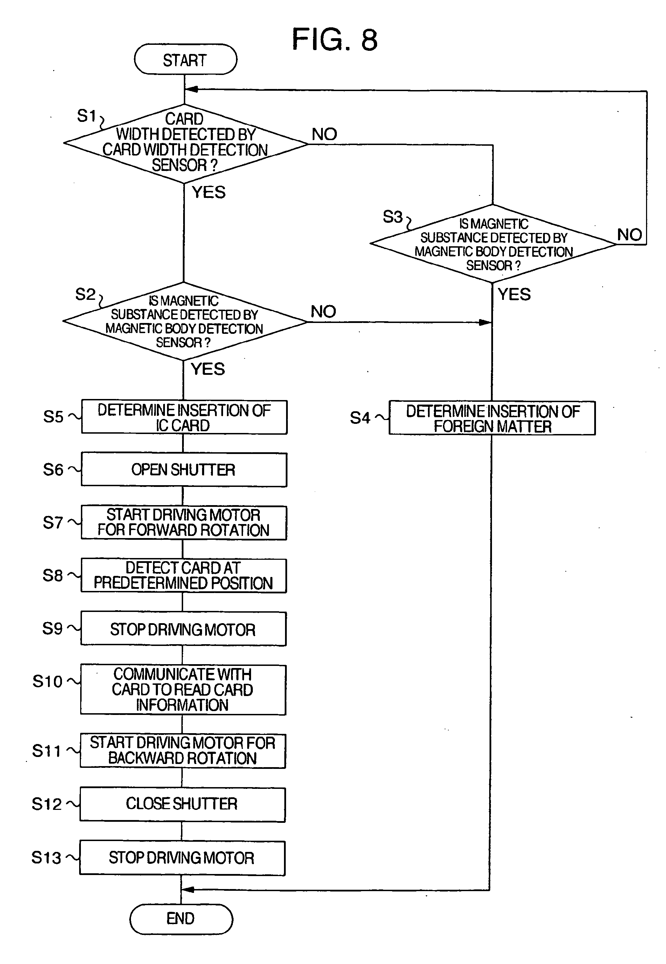

Fig. 8 is a flowchart showing procedures of operation of the IC card reader 100. Respective steps are executed by the controller 11 (more specifically, the CPU incorporated in the controller 11). In describing the present procedures, reference will be made as necessary to Fig. 5 showing the insertion state of card 2 into the IC card reader 100 and Figs. 6 and 7 showing the insertion states of foreign objects, respectively.

When an IC card 2 is inserted in the insertion port 1b as shown in Fig. 5, the card width detection sensor 3 detects an L-direction side end 2b of card 2 and outputs to the controller 11 a switching signal from OFF state to ON state. In addition, the magnetic body detection sensor 4 detects the IC contact 2a of card 2 from a change in the magnetic field near the insertion port 1b and outputs a voltage of the predetermined value to the controller 11. Thus, since the card width detection sensor 3 detects the object of card width W2 (step S1 in Fig. 8:YES) and the magnetic body detection sensor 4 detect a magnetic substance (step S2: YES), the controller 11 determines that an IC card is inserted in the insertion port 1b (step S5). It is to be noted that this decision result is either recorded on the memory unit 12 (Fig. 4) or transmitted to the host unit 30 by means of the communication unit 16 (Fig. 4).

Having determined the insertion of the IC card, the controller 11 opens the shutter 5 (Fig. 1) (step S6) for the sake of handling the card 2 and starts driving the motor for forward rotation (step S7). This causes the card 2 to pass under the shutter 5 so as to be conveyed in the F direction toward the main frame interior 1a by means of the rollers 6a. Then, as the card position detection sensor 7a (Fig. 1) does not detect the card 2 to come into OFF state and the card position detection sensors 7b and 7c (Fig. 1) detect the card 2 to come into ON state, the controller 11 determines that the card 2 is detected at the predetermined position (step S8) and after the lapse of a predetermined time, stops driving the motor 15 (step S9). In this manner, the card 2 is stopped at a position where the IC contact 8 on the side of card reader 100 can come into contact with the IC contact 2a as shown in Fig. 1.

With the motor 15 stopped, the controller 11 brings the IC contact 8 into contact with the IC contact 2a on the side of card 2 and causes the communication unit 13 (Fig. 4) to make communication with the IC of card 2 to read information from the IC (step S10). Then, the controller 11 causes the communication unit 16 to transmit the read information to the host unit 30 and when subsequently receiving from the host unit 30 a notice indicating that a process for the read information has been completed, the controller 11 separates the IC contact 8 from the IC contact 2a and starts driving the motor 15 for backward rotation (step S11). In this manner, the card 2 is conveyed in the B direction by means of the rollers 6a so as to be discharged to the insertion port 1b. At that time, the card width detection sensor 3 detects the end 2b of card 2 to come into ON state. Then, as the card 2 is drawn off from the insertion port 1b, the card width detection sensor 3 is brought into OFF state, so that the controller 11 closes the shutter 5 (step S12) and stops driving the motor 15 (step S13), thus ending the process.

On the other hand, when a plate-like foreign object 50 made of synthetic resin, having the same width W2 as the card 2 but not having a magnetic substance such as IC contact 2a at a position similar to that for the card 2, is inserted in the insertion port 1b as shown in Fig. 6, the card width detection sensor 3 detects an L-direction side end 50a of foreign object 50 and delivers to the controller 11 a switching signal from OFF state to ON state. In addition, since the magnetic field near the insertion port 1b hardly changes, the magnetic body detection sensor 4 does not detect a magnetic substance and delivers to the controller 11 a voltage of a predetermined value different from that during approaching of such a magnetic substance as IC contact 2a. In this manner, since the card width detection sensor 3 detects the object of card width W2 (step S1 in Fig. 8:YES) but the magnetic body detection sensor 4 does not detect a magnetic substance (step S2:NO), the controller 11 determines that a foreign matter is inserted in the insertion port 1b (step 4). It is to be noted that this decision result is either recorded in the memory unit 12 or sent by means of the communication unit 16 to the host unit 30 so as to be displayed with a display or LED in the host unit 30. Having determined the insertion of the foreign matter, the controller 11 ends the process without handling the foreign matter as a card.

Further, when a rod-like foreign object 51 made of a metallic magnetic material such as a screw driver having a width W3 smaller than the card width W2 is inserted in the insertion port 1b as shown in Fig. 7, the card width detection sensor 3 does not detect the foreign object 51 and delivers an OFF signal to the controller 11. In addition, the magnetic body detection sensor 4 detects the magnetic foreign object 51 made of metal from a change in the magnetic field near the insertion port 1b and delivers to the controller 11 a voltage having a value similar to that during insertion of the IC card 2. Thus, since the card width detection sensor 3 does not detect an object of card width W2 (step S1 in Fig. 8:NO) but the magnetic body detection sensor 4 has detected a magnetic substance (step 3:YES), the controller 11 determines that a foreign matter is inserted in the insertion port 1b (step 4). Having made such a decision, the controller 11 ends the process without handling the foreign matter as a card.

Further, the foreign object 51 as shown in Fig. 7 is inserted from the insertion port 1b either between the card width detection sensor 3 and the magnetic body detection sensor 4 or on the R-direction side of the magnetic body detection sensor 4, the card width detection sensor 3 does not detect the foreign object 51 to deliver an OFF signal and the magnetic body detection sensor 4 does not detect the foreign object 51 to deliver a voltage of a predetermined value different from that during approaching of the magnetic object. In this manner, since the card width detection sensor 3 does not detect an object of card width W2 (step S1:NO) and the magnetic body detection sensor 3 does not detect a magnetic substance (step S3:NO), the controller 11 determines that nothing is inserted in the insertion port 1b. Then, the controller 11 shifts to the step S1 and waits for reception of a new output from the card width detection sensor 3 or magnetic body detection sensor 4.

As described above, in addition to the detection of the width of an object inserted in the insertion port 1b by means of the card width detection sensor 3, the magnetic body detection sensor 4 detects whether the object has the magnetic substance at the predetermined position. Accordingly, when a regular IC card 2 of card width W2 and having the IC contact 2a at the predetermined position is inserted, the card can be determined as an IC card. Further, when either a foreign object 50 having the card width W2 but not having the magnetic substance which passes along the position or location X (Fig. 2) or a foreign object 51 not having the card width W2 is inserted, the foreign object can be determined as a foreign matter. Then, only in the case of determination of an IC card, the inserted object (IC card 2) is treated as a card and therefore the foreign object 50 or 51 is not permitted to be treated as a card.

Further, only in the case of determination of the insertion of an IC card, the shutter 5 can be opened, with the result that when the foreign object 50 or 51 is inserted in the insertion port 1b, it cannot be determined as an IC card and the shutter 5 will not open to prevent the foreign object 50 or 51 from infiltrating into the main frame interior 1a, thereby ensuring that clogging the passage 1c with the foreign object 50 or 51 near the shutter 5 or at a position closer to the main frame interior 1a than to the shutter can be prevented and parts such as rollers 6a and rollers 6b and the IC contact 8 in the main frame interior 1a can be prevented from being damaged by the foreign object 50 or 51. In addition, if the IC contact 8 is brought into contact with the metallic foreign object 51 two apply an electric current to the foreign object in order to read information, the IC contact 8 will be short-circuited and the communication unit 13 comprised of the IC contact 8 and the circuit will be damaged electrically. But, by performing the information reading process only when the insertion of an IC card is determined as described previously, an IC card cannot be determined even if a foreign object 51 is inserted in the insertion port 1b and therefore the information reading process will not be applied to the foreign object 51, thereby making it possible to prevent the IC contact 8 and communication unit 13 from being damaged electrically.

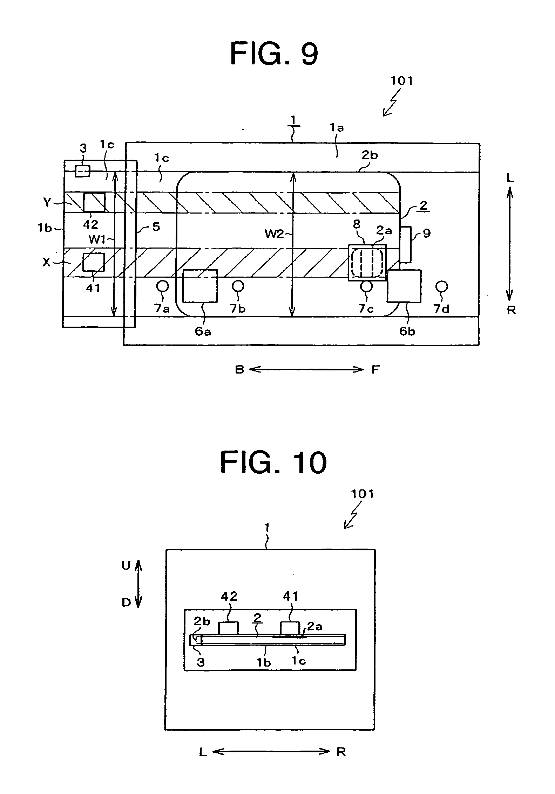

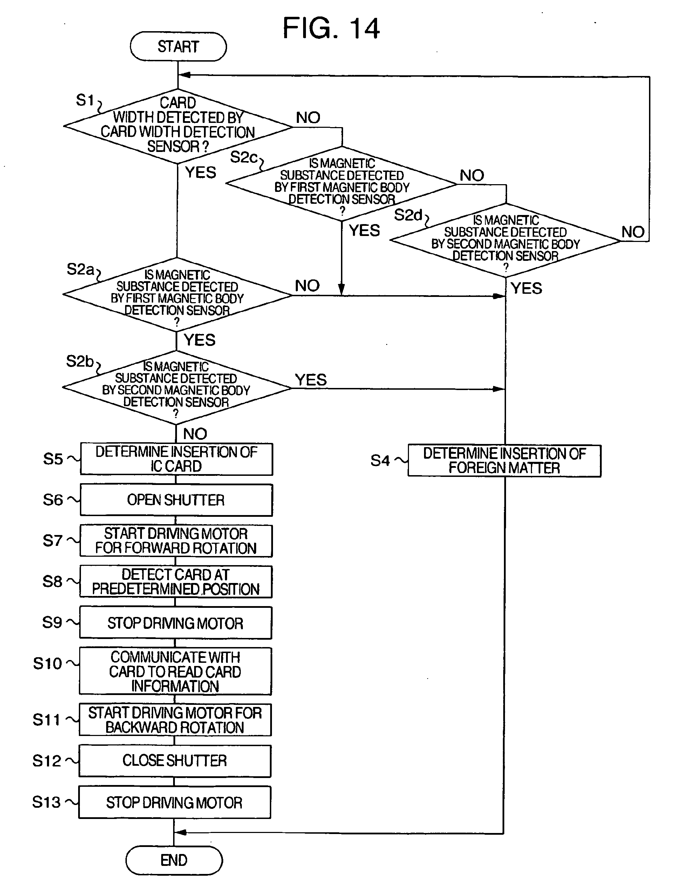

Figs. 9 to 14 are diagrams showing a first embodiment of the present invention. In Figs. 9 to 13, components like those in the aforementioned Figs. 1 to 7 are designated by like reference numerals and in Fig. 14, the steps like those in Fig. 8 are designated by like reference numerals.

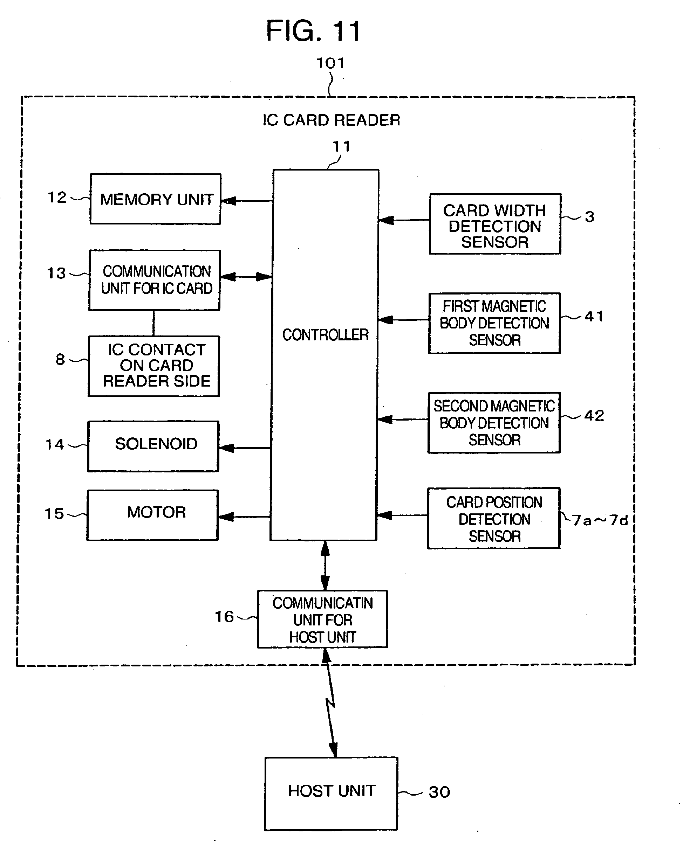

An IC card reader 101 according to the present embodiment is provided with a first magnetic body detection sensor 41 and a second magnetic body detection sensor 42 as shown in a block diagram of Fig. 11. The sensors are each comprised of a Hall element and a magnet as in the case of the aforementioned magnetic body detection sensor 4 (for example, Fig. 4). The first magnetic body detection sensor 41 is arranged near an insertion port 1b on the U-direction side of passage 1c as shown in Fig. 10 in a position or location X (shown in Fig. 9) along which an IC contact 2a of card 2 passes. The second magnetic body detection sensor 42 is arranged near the insertion port 1b on the U-direction side of passage 1c as shown in Fig. 10 in a zone Y different from the zone X along which the IC contact 2a of card 2 passes, in other words, in the zone Y along which the IC contact 2a does not pass. The first magnetic body detection sensor 41 constitutes an embodiment of first magnetic body detection means in the present invention and the second magnetic body detection sensor 42 constitutes an embodiment of second magnetic body detection means in the invention.

On the basis of a change in a magnetic field generated by the magnet in the more proximity to the insertion port 1b than to a shutter 5, each of the sensors 41 and 42 detects whether a magnetic substance such as metal is inserted in the insertion port 1b. For example, as the metallic magnetic substance such as IC contact 2a approaches, the magnetic field by the magnet changes and hence the Hall element detects this change and delivers a voltage of a predetermined value to the controller 11. Contrarily, without approaching of a magnetic substance, the magnetic field by the magnet hardly changes and consequently the Hall element delivers to the controller 11 a voltage of a predetermined value different from that during the aforementioned approaching of a magnetic substance. The first magnetic body detection sensor 41 detects the IC contact 2a of card 2 and therefore it is preferably disposed on the U-direction side of passage 1c opposing the IC contact 2a whereas the second magnetic body detection sensor 42 may be disposed not on the U-direction side of passage 1c but on the D-direction side of passage 1c, for instance.

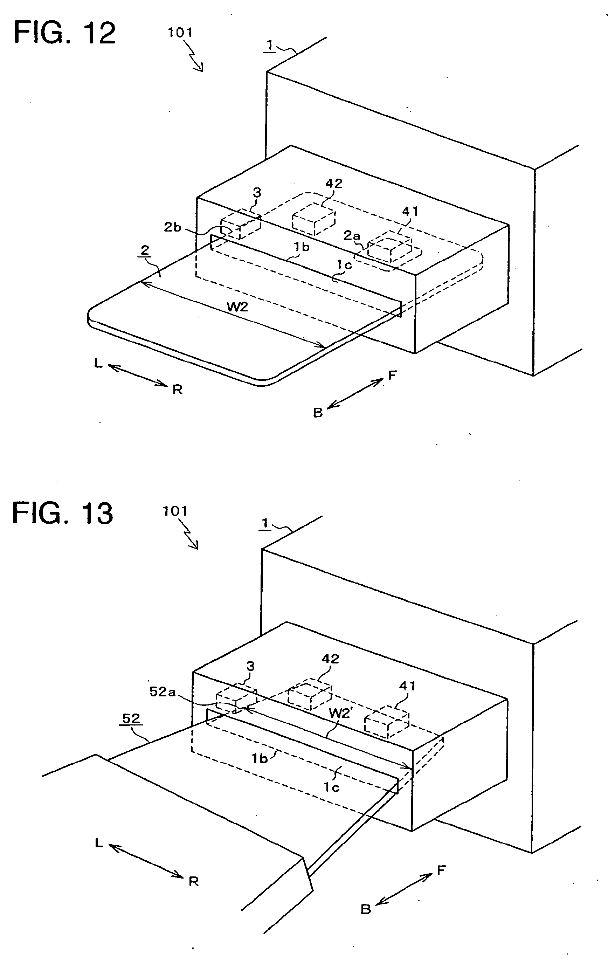

Fig. 14 is a flowchart showing procedures of operation of the IC card reader 101. In describing the present procedures, reference will be made as necessary to Figs. 12 and 13 and the previously described Figs. 6 and 7. When an IC card 2 is inserted in the insertion port 1b as shown in Fig. 12, the card width detection sensor 3 detects an L-direction side end 2b of the card 2 and delivers to the controller 11 a switching signal from OFF state to ON state. Also, the first magnetic body detection sensor 41 detects the IC contact 2a of card 2 from a change in the magnetic field near the insertion port 1b and delivers a voltage of the predetermined value to the controller 11. Further, on account of the fact that the magnetic field near the insertion port 1b hardly changes, the second magnetic body detection sensor 42 does not detect a magnetic-substance and it delivers to the controller 11 a voltage of a predetermined value different from that during approaching of a magnetic substance. Thus, since the card width detection sensor 3 detects the object of card width W2 (step S1 in Fig. 14:YES), the first magnetic body detection sensor 41 detects the magnetic substance (step S2a:YES) and the second magnetic body detection sensor 42 does not detect any magnetic substance (step S2b:NO), the controller 11 determines that an IC card is inserted in the insertion port 1b (step S5). Having made the decision, the controller 11 executes the process of step S6 to step S13 similarly to the case explained in connection with Fig. 8 to treat the inserted IC card and after the execution, ends the process applied to the IC card 2.

On the other hand, when a palette knife-like planar foreign object 52 made of metal having the substantially the same width W2' as the card 2 is inserted in the insertion port 1b as shown in Fig. 13, the card width detection sensor 3 detects an L-direction end 52a of the foreign object 52 and delivers to the controller 11 a switching signal from OFF state to ON state. Further, the first magnetic body detection sensor 41 and second magnetic body detection sensor 42 detect the metallic foreign object 52 from a change in the magnetic field near the insertion port 1b to deliver to the controller 11 voltages of the predetermined value, respectively. Thus, since the card width detection sensor 3 detects the object of card with W2 (step S1 in Fig. 14:YES), the first magnetic body detection sensor 41 detect the magnetic object (step 2a:YES) and the second magnetic object detection sensor 42 also detects the magnetic object (step S2b:YES), the controller 11 determines that a foreign matter is inserted in the insertion port 1b (step 4). Having made the decision, the controller 11 ends the process without handling the inserted foreign object 52 as a card.

Also, a plate-like foreign object 50 made of synthetic resin as shown in Fig. 6 having the same width W2 as the card 2 but not having such a magnetic substance as the IC contact 2a is inserted in the insertion port 1b, the card width detection sensor 3 detects an L-direction side end 50a of the foreign object 50 to deliver to the controller 11 a switching signal from OFF state to ON state. In addition, on account of the fact that the magnetic field near the insertion port 1b hardly changes, the first magnetic body detection sensor 41 and second magnetic body detection sensor 42 do not detect the foreign object 50 to deliver to the controller 11 voltages of the predetermined value different from that during approaching of a magnetic substance, respectively. Thus, since the card width detection sensor 3 detects the object of card width W2 (step S1 in Fig. 14:YES) and the first magnetic body detection sensor 41 does not detect a magnetic substance (step S2a:NO), the controller 11 determines that a foreign matter is inserted in the insertion port 1b (step S4). Having made the decision, the controller 11 ends the process without handling the inserted foreign object 50 as a card.

Further, when a rod-like foreign object 51 as shown in Fig. 7 made of metal and having a width W3 smaller than the card width W2 is inserted from the insertion port 1b to below the first magnetic body detection sensor 41, the card width detection sensor 3 does not detect the foreign object 51 and delivers an OFF signal to the controller 11. Also, the first magnetic body detection sensor 41 detects the metallic foreign object 51 from a change in the magnetic field near the insertion port 1b and delivers a voltage of the predetermined value to the controller 11. Further, for the second magnetic body detection sensor 42, the magnetic field near the insertion port 1b hardly changes and therefore it does not detect the foreign object 51 to deliver a voltage of the predetermined value different from that during approaching of a magnetic substance. Thus, since the card width detection sensor 3 does not detect an object of card width W2 (step S1 in Fig. 14:NO) and the first magnetic body detection sensor 41 detects a magnetic substance (step S2c:YES), the controller 11 determines that a foreign matter is inserted in the insertion port 1b (step S4). Having made the decision, the controller 11 ends the process without handling the inserted foreign object 51 as a card.

Further, when the foreign object 51 as shown in Fig. 7 is inserted from the insertion port 1b to below the second magnetic body detection sensor 42, the card width detection sensor 3 does not detect the foreign object 51 to deliver an OFF signal to the controller 11. The first magnetic body detection sensor 41 does not detect the foreign object 51, either, to deliver to the controller 11 a voltage of the predetermined value different from that during approaching of a magnetic substance because the magnetic field near the insertion port 1b hardly changes. In addition, the second magnetic body detection sensor 42 detects the foreign object 51 from a change in the magnetic field near the insertion port 1b to deliver a voltage of the predetermined value to the controller 11. Thus, since the card width detection sensor 3 does not detect an object of card width W2 (step S1 in Fig. 14:NO), the first magnetic body detection sensor 41 does not detect any magnetic substance (step S2c:NO) and the second magnetic body detection sensor 42 detects the magnetic object (step S2d:YES), the controller 11 determines that a foreign matter is inserted in the insertion port 1b (step S4). Having made the decision, the controller 11 ends the process without handing the inserted foreign object 51 as a card.

Furthermore, when a foreign object 51 as shown in Fig. 7 is inserted from the insertion port 1b between the card width detection sensor 3 and the second magnetic body detection sensor 42, between the second and first magnetic body detection sensors 42 and 41 or on the R-direction side of the first magnetic body detection sensor 41, the card width detection sensor 3 does not detect the foreign object 51 and delivers an OFF signal. In addition, both the first magnetic body detection sensor 41 and the second magnetic body detection sensor 42 do not detect the foreign object 51 to deliver voltages of the predetermined value different from that during approaching of a magnetic substance, respectively. Then, since the card width detection sensor 3 does not detect an object of card width W2 (step S1:NO), the first magnetic body detection sensor 41 does not detect a magnetic substance (step 2c:NO) and the second magnetic body detection sensor 42 does not detect a magnetic substance, either (step S2d:NO), the controller 11 determines that nothing is inserted in the insertion port 1b. Then, the controller 11 shifts to the step S1 to wait for reception of new outputs from the aforementioned three sensors 3, 41 and 42.

As described above, in the first embodiment, in addition to the detection of the width of an object inserted in the insertion port 1b by means of the card width detection sensor 3, the first magnetic body detection sensor 41 detects whether the object has a magnetic substance at the predetermined position and besides, the second magnetic body detection sensor 42 detects whether the object has a magnetic substance at a position different from the predetermined position. Accordingly, in case a regular IC card having the card width W2, having the IC contact 2a at the predetermined position and not having a magnetic substance which passes along the position Y (Fig. 9) is inserted, the inserted object can be determined as an IC card. Further, if a foreign object 52 having substantially the same width W2' as the card 2 and having a magnetic substance which passes along the position Y, a foreign object 50 having the card width W2 but not having a magnetic substance which passes along the position X (Fig. 9) or a foreign object 51 not having the card width W2 is inserted, each of the foreign objects can be determined as a foreign matter. Then, only when an IC card is determined, the inserted object (1C card 2) is handled as a card, thus excluding handling of the foreign object 50, 51 or 52 as a card.

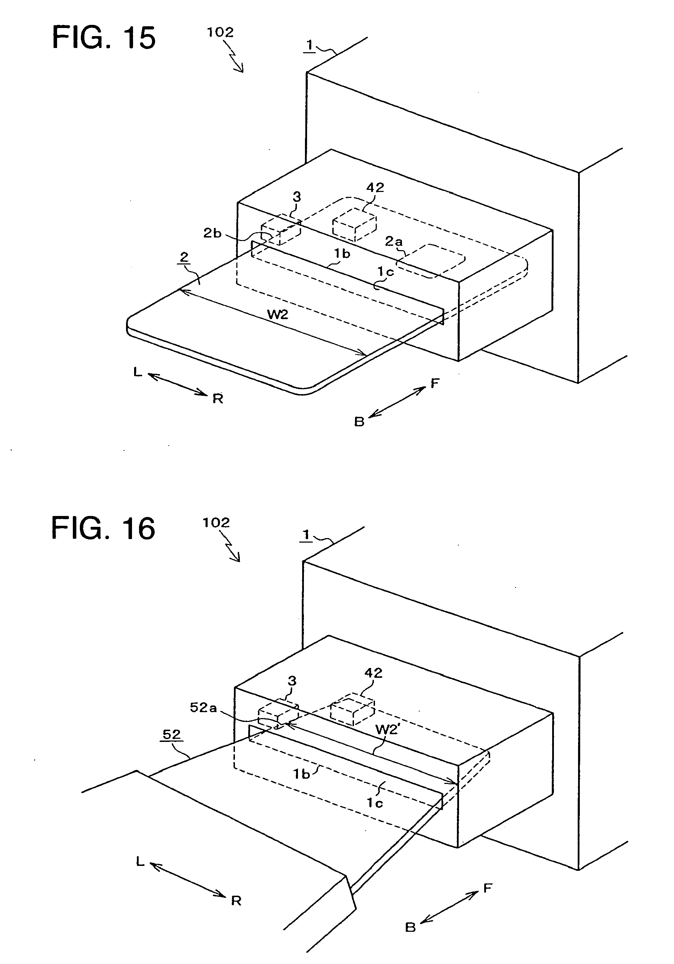

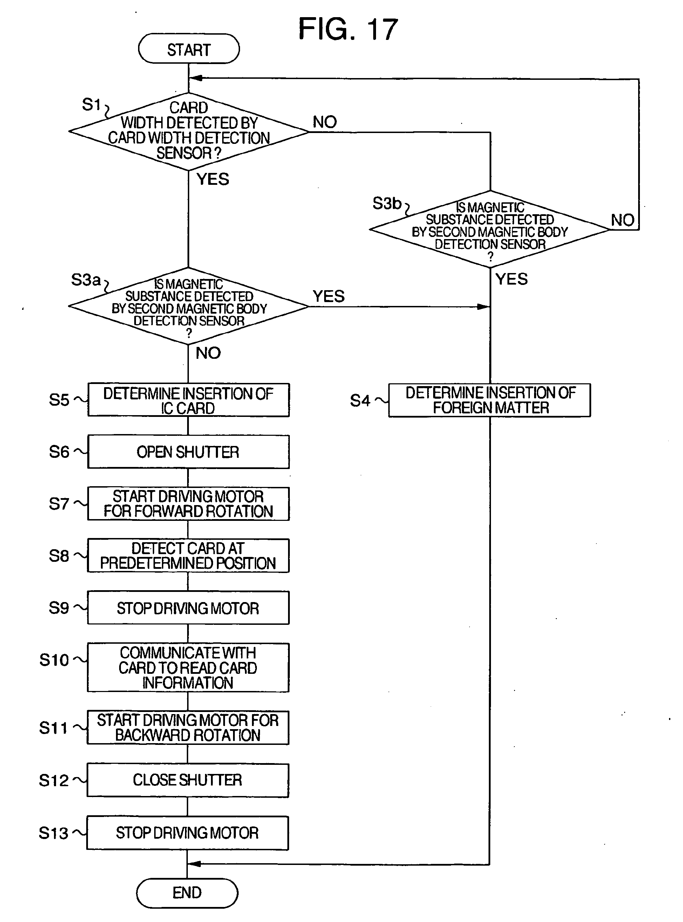

Figs. 15 to 17 are diagrams showing a second embodiment of the present invention. In Figs. 15 and 16, components like those in the aforementioned Figs. 5 to 7 and Figs. 12 and 13 are designated by like reference numerals and in Fig. 17, steps like those in Figs. 8 and 14 are designated by like reference numerals.

As shown in Figs. 15 and 16, an IC card reader 102 according to the present embodiment is provided with only the second magnetic body detection sensor 42 explained in connection with the first embodiment and is not provided with the first magnetic body detection sensor 41. Accordingly, on the basis of a change in the magnetic field generated by the magnet in the more proximity to the insertion port 1b than to the shutter 5, the second magnetic body detection sensor 42 detects whether a magnetic object such as metal is inserted in the insertion port 1b. This second magnetic body detection sensor 42 constitutes an embodiment of magnetic body detection means in this invention.

Fig. 17 is a flowchart showing procedures of operation of the IC card reader 102. In describing the present procedures, reference will be made as necessary to Figs. 15 and 16 and the aforementioned Fig. 7. When an IC card is inserted in the insertion port 1b as shown in Fig. 15, a card width detection sensor 3 detects an L-direction side end 2b of the card 2 to deliver to the controller 11 a switching signal from OFF state to ON state. On account of the fact that the magnetic field near the insertion port 1b hardly changes, the second magnetic body detection sensor 42 does not detect a magnetic substance and delivers to the controller 11 a voltage of the predetermined value different from that during approaching of a magnetic substance. Thus, since the card width detection sensor 3 detects an object of card width W2 (step S1 in Fig. 17:YES) and the second magnetic object detection sensor 42 does not detect a magnetic substance (Step S3a:NO), the controller 11 determines that an IC card is inserted in the insertion port 1b (step S5). Having made the decision, the controller 11 executes the process of steps S6 to step S13 in a similar way to an explanation given in connection with Fig. 8 for the sake of treating the inserted IC card and after the execution, ends the process applied to the IC card 2.

On the other hand, when a palette knife-like planar foreign object 52 made of metal and having substantially the same width W2' as the card 2 is inserted in the insertion port 1b as shown in Fig. 16, the card width detection sensor 3 detects an L-direction side end 52a of the foreign object 52 and delivers to the controller 11 a switching signal from OFF state to ON state. Besides, the second magnetic body detection sensor 42 detects the metallic foreign object 52 representing a magnetic substance from a change in the magnetic field near the insertion port 1b and delivers a voltage of the predetermined value to the controller 11. Thus, since the card width detection sensor 3 detects the object of card width W2 (step S1 in Fig. 17:YES) and the second magnetic body detection sensor 42 detects a magnetic substance (step S3a:YES), the controller 11 determines that a foreign matter is inserted in the insertion port 1b (step 4). Having made the decision, the controller 11 ends the process without handling the inserted foreign object 52 as a card.

Further, when a metallic rod-like foreign object 51 having a width W3 smaller than the card width W2 as shown in Fig. 7 is inserted from the insertion port 1b to below the second magnetic body detection sensor 42, the card width detection sensor 3 does not detect the foreign object 51 to deliver an OFF signal to the controller 11. In addition, the second magnetic body detection sensor 42 detects the metallic foreign object 51 representing a magnetic substance from a change in the magnetic field near the insertion port 1b and delivers a voltage of the predetermined value to the controller 11. Thus, since the card width detection sensor 3 does not detect an object of the card width W2 (step S1 in Fig. 17:NO) and the second magnetic body detection sensor 42 has detected a magnetic substance (step S3b:YES), the controller 11 determines that a foreign matter is inserted in the insertion port 1b (step S4). Having made the decision, the controller 11 ends the process without handling the inserted foreign object 51 as a card.

Moreover, the foreign object 51 as shown in Fig. 7 is inserted from the insertion port 1b either between the card width detection sensor 3 and the second magnetic body detection sensor 42 or on the R-direction side of the second magnetic body detection sensor 42, the card width detection sensor 3 does not detect the foreign object 51 to deliver an OFF signal. In addition, the second magnetic body detection sensor 42 does not detect the foreign object 51 to deliver a voltage of the predetermined value different from that during approaching of a magnetic substance. Thus, since the card width detection sensor 3 does not detect an object of card width W2 (step S1:NO) and the second magnetic body detection sensor 42 does not detect a magnetic substance (step S3b:NO), the controller 11 determines that nothing is inserted in the insertion port 1b. Then, the controller 11 shifts to the step S1 and waits for reception of new outputs from the aforementioned two sensors 3 and 42.

As described above, according to the second embodiment, in addition to the detection of the width of an object inserted in the insertion port 1b by means of the card width detection sensor 3, the second magnetic body detection sensor 42 detects whether the object has a magnetic substance at a position different from the predetermined position. For this reason, when a regular IC card 2 having the card width W2 and not having a magnetic substance which passes along the position Y (Fig. 9) is inserted, it can be determined as an IC card. Besides, when a foreign object 52 having substantially the same width W2' as the card 2 and having a magnetic object which passes along the position Y is inserted or when a foreign object 51 not having the card width W2 is so inserted as to pass along the position Y, each of the foreign objects can be determined as a foreign matter. Then, only when an IC card is determined, the inserted object (IC card 2) is handled as a card, excluding handling of the foreign object 51 or 52 as a card.

In the embodiments set forth so far, the magnetic object detection sensor 4 or the first magnetic body detection sensor 41 is provided at the position or location X in which the IC contact 2a of IC card 2 is detected as a magnetic substance and the second magnetic body detection sensor 42 is provided at the position Y in which the IC contact 2a is not detected as a magnetic substance but the present invention is not limited to this only. For example, at a position where the IC of IC card 2 is detected as a magnetic substance, the magnetic body detection sensor 4 or the first magnetic body detection sensor 41 may be provided and at a position where the IC is not detected as a magnetic substance, the second magnetic body detection sensor 42 may be provided. (The IC is constructed by including a magnetic substance such as a copper pattern, aluminum pattern or the like). Alternatively, a magnetic body sensor may be provided over the whole of the passage 1c in the more proximity to the insertion port 1b than to the shutter 5 in order that a magnetic substance such as metal can be detected.

Further, in the foregoing embodiments, the card width detection sensor 3 comprised of one photo-interrupter is used as the width detection means in the invention but this invention is not limited to this only. For example, two (three or more may be permissible) photo-interrupters may be used for the card width detection sensor and they may be arranged on both the L-direction and R-direction sides of the passage 1c. Alternatively, in place of the photo-interrupter, a micro-switch, for instance, may be used. In other words, the width detection means in the invention may be of any type, provided that it can detect whether an object inserted in the insertion port 1b has a predetermined width such as the card width W2.

Further, in the foregoing embodiments, the magnetic body detection sensor 4, 41 or 42 comprised of the Hall element and the magnet is used as magnetic body detection means in the present invention. The magnetic field can be changed in frequency, phase or amplitude. Each of the magnetic body detection sensors 4, 41 and 42 is not limited to one in number but two or more individual sensors may be provided. In this manner, a magnetic object inserted in the insertion port 1b can be detected with higher accuracies.

Further, in the foregoing embodiments, the present invention has been exemplified as being applied to the IC card readers 100 to 102 each of which comprises the shutter 5 for regulating the infiltration of the card 2 and the motor 15 and rollers 6a representing the convey means for conveying the card 2 but the present invention may also be applied to a card information reading device without the shutter and convey means.

Further, in the foregoing embodiments, the present invention has been described by way of an instance applied to the IC card readers 100 to 102 in which information reading is applied to a contact type IC card 2 having the IC contact 2a at the predetermined position but this invention may be applied to a magnetic card reader in which information reading is applied to a magnetic card having magnetic stripes at a predetermined position or an IC card reader in which information reading is applied to a non-contact type IC card having an IC and a coil at predetermined positions. In alternatives as above, the magnetic body detection sensor 4 or the first magnetic body detection sensor 41 may be provided at a position where the magnetic stripes, IC or coil is detected as a magnetic substance and the second magnetic body detection sensor 42 may be provided at a position where the aforementioned member is not detected as a magnetic substance. Alternatively, this invention may also be applied to a card reader for hybrid cards in which information reading is applied to a hybrid card having any two or more of IC contact, magnetic stripes and coil for non-contact communication in combination. In other words, the present invention may be applied to card information reading devices in which information reading is applied to various kinds of cards, respectively.

## Claims

1. A card information reading device having an insertion port (1b) for a magnetic or contact type card (2), reading means (102) disposed inside a main frame (1) to read information recorded on the card (2), and a card passage (1c) leading from the insertion port (1b) to the interior (1a) of the main frame (1), said device comprising:
width detection means (3) for detecting whether an object having a predetermined width is inserted in said insertion port (1b);
magnetic body detection means (42) for detecting, on the basis of a change in a magnetic field near said insertion port (1b), whether a magnetic substance is inserted in said insertion port (1b); and
decision means for deciding, on the basis of a result of detection by said width detection means (3) and magnetic body detection means (42), whether a card (2) or foreign matter is inserted,
**characterised in that**
said magnetic body detection means (42) includes a Hall element and a magnet and is disposed at a position offset from the path along which a magnetic substance provided at a predetermined position of the card (2) passes through the card passage (1c), to detect whether a magnetic substance is inserted; and
said decision means is adapted to determine that a card (2) is inserted when an object of the predetermined width is detected by said width detection means (3) and a magnetic substance is not detected by said magnetic body detection means (42), and to determine that foreign matter is inserted when a magnetic substance is detected by said magnetic body detection means (42).

2. The device of claim 1, wherein
a further magnetic body detection means (41) is disposed at a position along which the magnetic substance provided at a predetermined position of a card (2) passes through said card passage (1c), to detect the magnetic substance; and
said decision means is adapted to determine that a card (2) is inserted when an object of the predetermined width is detected by said width detection means (3), a magnetic substance is detected by said further magnetic body detection means (41) and a magnetic substance is not detected by the first-mentioned magnetic body detection means (42), and to determine that foreign matter is inserted when either the detection of an object having the predetermined width by said width detection means (3) or the detection of a magnetic substance by said further magnetic body detection means (41) fails or when a magnetic substance is detected by the first-mentioned magnetic body detection means (42).

3. The device of claim 1 or 2, further comprising:
a shutter (5) disposed in said card passage (1c) to regulate the entry of a card (2) into the interior (1a) of main frame (1); and
control means (11) for controlling the opening/closing of said shutter (5), wherein
said width detection means (3) and said magnetic body detection means (41, 42) are disposed in said card passage (1c) at a position closer to said insertion port (1b) than to said shutter (5); and
said control means (11) is adapted to keep said shutter (5) closed until a decision is made by said decision means, and to open said shutter (5) only when said decision means determines that a card (2) is inserted.

4. The device of any preceding claim, wherein said reading means (102) is adapted to read information only when said decision means determines that a card (2) is inserted.

## Patentansprüche

1. Karteninformations-Lesegerät mit einer Einführöffnung (1 b) für eine Magnet- oder Kontaktkarte (2), einer innerhalb eines Gerätegehäuses (1) angeordneten Leseeinrichtung (102) zum Lesen von auf der Karte (2) aufgezeichneten Informationen und einer von der Einführöffnung (1b) ins Innere (1a) des Gerätegehäuses (1) führenden Kartendurchführung (1c), wobei das Gerät aufweist:
eine Breitenerkennungseinrichtung (3) zum Erkennen, ob in die Einführöffnung (1 b) ein Gegenstand mit vorgegebener Breite eingeführt wird,
eine Magnetkörper-Erkennungseinrichtung (42) zum Erkennen, ob in die Einführöffnung (1 b) eine Magnetsubstanz eingegeben wird, aufgrund einer Änderung in einem Magnetfeld nahe der Einführöffnung (1 b) und
einer Entscheidungseinrichtung zum Entscheiden, ob eine Karte (2) oder ein Fremdkörper eingeführt wird, aufgrund des Ergebnisses der Erkennung durch die Breitenerkennungseinrichtung (3) und die Magnetkörper-Erkennungseinrichtung (42),
**dadurch gekennzeichnet, dass**
die Magnetkörper-Erkennungseinrichtung (42) ein Hall-Element und einen Magnet aufweist und an einer Stelle angeordnet ist, die gegenüber dem Pfad versetzt ist, längs dem eine an einer vorgegebenen Stelle der Karte (2) vorgesehene Magnetsubstanz die Kartendurchführung (1c) passiert, um zu erkennen, ob eine Magnetsubstanz eingeführt wird, und
die Entscheidungseinrichtung ausgelegt ist zu bestimmen, dass eine Karte (2) eingeführt wird, wenn von der Breitenerkennungseinrichtung (2) ein Gegenstand der vorgegebenen Breite erkannt wird und von der Magnetkörper-Erkennungseinrichtung (42) keine Magnetsubstanz erkannt wird, und zu bestimmen, dass ein Fremdkörper eingeführt wird, wenn von der Magnetkörper-Erkennungseinrichtung (42) eine Magnetsubstanz erkannt wird.

2. Gerät nach Anspruch 1, wobei
an einer Position, an der sich die an einer vorgegebenen Stelle der Karte (2) vorgesehene Magnetsubstanz durch die Kartendurchführung (1c) vorbeibewegt, eine weitere Magnetkörper-Erkennungseinrichtung (41) angeordnet ist, um die Magnetsubstanz zu erkennen, und
die Entscheidungseinrichtung ausgelegt ist zu bestimmen, dass eine Karte (2) eingeführt wird, wenn von der Breitenerkennungseinrichtung (3) ein Gegenstand vorgegebener Breite erkannt wird, von der weiteren Magnetkörper-Erkennungseinrichtung (41) eine Magnetsubstanz erkannt wird und von der erstgenannten Magnetkörper-Erkennungseinrichtung (42) keine Magnetsubstanz erkannt wird, und zu bestimmen, dass ein Fremdkörper eingeführt wird, wenn entweder die Erkennung eines Gegenstands der vorgegebenen Breite durch die Breitenerkennungseinrichtung (3) oder die Erkennung einer Magnetsubstanz durch die weitere Magnetkörper-Erkennungseinrichtung (41) versagt oder wenn von der erstgenannten Magnetkörper-Erkennungseinrichtung (42) eine Magnetsubstanz erkannt wird.

3. Gerät nach Anspruch 1 oder 2 mit ferner
einem in der Kartendurchführung (1c) angeordneten Verschluss (5) zum Regeln des Eintritts einer Karte (2) in das Innere (1a) des Hauptkörpers (1) und
einer Steuereinrichtung (11) zum Steuern des Öffnens/Schließens des Verschlusses (5), wobei
die Breitenerkennungseinrichtung (3) und die Magnetkörper-Erkennungseinrichtungen (41, 42) in der Kartendurchführung (1c) an einer Stelle angeordnet sind, die näher an der Einführöffnung (1 b) liegt als der Verschluss (5), und
die Steuereinrichtung (11) so ausgelegt ist, dass sie den Verschluss (5) geschlossen hält, bis von der Entscheidungseinrichtung eine Entscheidung getroffen ist, und den Verschluss (5) erst dann öffnet, wenn die Entscheidungseinrichtung bestimmt, dass eine Karte (2) eingeführt wird.

4. Gerät nach einem der vorhergehenden Ansprüche, wobei die Leseeinrichtung (102) so ausgelegt ist, dass sie Informationen nur dann liest, wenn die Entscheidungseinrichtung bestimmt, dass eine Karte (2) eingeführt wird.

## Revendications

1. Dispositif de lecture d'informations sur une carte, ayant un orifice d'insertion (1b) pour une carte (2) de type magnétique ou à contact, un moyen de lecture (102) disposé à l'intérieur d'une unité centrale (1) pour lire des informations enregistrées sur la carte (2), et un passage (1c) pour carte menant de l'orifice d'insertion (1b) à l'intérieur (la) de l'unité centrale (1), ledit dispositif comportant :
un moyen de détection de largeur (3) pour détecter si, oui ou non, un objet d'une largeur prédéterminée est inséré dans ledit orifice d'insertion (1b) ;
un moyen de détection de corps magnétique (42) pour détecter, d'après un changement dans un champ magnétique près dudit orifice d'insertion (1b), si, oui ou non, une substance magnétique est insérée dans ledit orifice d'insertion (1b) ; et
un moyen de prise de décision pour décider, d'après un résultat de détection par lesdits moyen de détection de largeur (3) et moyen de détection de corps magnétique (42), si, oui ou non, une carte (2) ou un corps étranger est inséré,
**caractérisé en ce que**
ledit moyen de détection de corps magnétique (42) comprend un élément à effet Hall et un aimant et est disposé à un emplacement décalé par rapport au trajet emprunté par une substance magnétique présente à un emplacement prédéterminé sur la carte (2) dans le passage (1c) pour carte ; afin de détecter si, oui ou non, une substance magnétique est insérée ; et
ledit moyen de prise de décision est conçu pour déterminer qu'une carte (2) est insérée lorsqu'un objet de la largeur prédéterminée est détecté par ledit moyen de détection de largeur (3) et qu'une substance magnétique n'est pas détectée par ledit moyen de détection de corps magnétique (42), et pour déterminer qu'un corps étranger est inséré lorsqu'une substance magnétique est détectée par ledit moyen de détection de corps magnétique (42).

2. Dispositif selon la revendication 1, dans lequel
un autre moyen de détection de corps magnétique (41) est disposé à un emplacement le long duquel la substance magnétique présente à un emplacement prédéterminé sur une carte (2) emprunte ledit passage (1c) pour carte, afin de détecter la substance magnétique ; et
ledit moyen de prise de décision est conçu pour déterminer qu'une carte (2) est insérée lorsqu'un objet de la largeur prédéterminée est détecté par ledit moyen de détection de largeur (3), qu'une substance magnétique est détectée par ledit autre moyen de détection de corps magnétique (41) et qu'une substance magnétique n'est pas détectée par le premier moyen de détection de corps magnétique cité (42), et pour déterminer qu'un corps étranger est inséré lorsque soit la détection, par ledit moyen de détection de largeur (3), d'un objet de la largeur prédéterminée, soit la détection d'une substance magnétique par ledit autre moyen de détection de corps magnétique (41) échoue ou lorsqu'une substance magnétique est détectée par le premier moyen de détection de corps magnétique cité (42).

3. Dispositif selon la revendication 1 ou 2, comportant en outre :
un volet d'obturation (5) disposé dans ledit passage (1c) pour carte afin de régir l'entrée d'une carte (2) à l'intérieur (la) de l'unité centrale (1) ; et
un moyen de commande (11) pour commander l'ouverture/la fermeture dudit volet d'obturation (5),
ledit moyen de détection de largeur (3) et lesdits moyens de détection de corps magnétique (41, 42) sont disposés dans ledit passage (1c) pour carte à un emplacement plus proche dudit orifice d'insertion (1b) que dudit volet d'obturation (5) ; et
ledit moyen de commande est conçu pour maintenir fermé ledit volet d'obturation (5) jusqu'à ce qu'une décision soit prise par ledit moyen de prise de décision, et pour n'ouvrir ledit volet d'obturation (5) que lorsque ledit moyen de prise de décision détermine qu'une carte (2) est insérée.

4. Dispositif selon l'une quelconque des revendications précédentes, dans lequel ledit moyen de lecture (102) est conçu pour ne lire des informations que lorsque ledit moyen de prise de décision détermine qu'une carte (2) est insérée.
